# EUROPÄISCHE PATENTANMELDUNG

(11) **EP 3 822 568 A1**
(43) Veröffentlichungstag der Anmeldung: **19.05.2021**
(21) Anmeldenummer: 19209070.2
(22) Anmeldetag: 14.11.2019
(51) Int. Cl.: F28D 1/03, F28F 3/02, H01F 27/10

(54) **RADIATOR ZUR KÜHLUNG EINES TRANSFORMATORS ODER EINER DROSSEL**

(71) Anmelder: Siemens Energy Global GmbH & Co. KG, 81739 München (DE)
(72) Erfinder: Hamberger, Peter, 4202 Kirchschlag bei Linz (AT); Hrustic, Anel, 4030 Linz (AT); Mayer, Harald, 90552 Röthenbach an der Pegnitz (DE); Stockner, Markus, 3341 Ybbsitz (AT)
(74) Vertreter: Maier, Daniel Oliver

(57) **Zusammenfassung**

Die Erfindung betrifft einen Radiator (6) zur Kühlung eines Transformators (1), vorzugsweise eines Leistungstransformators, oder einer Drossel, der Radiator (6) umfassend mehrere parallel von einem Kühlmittel durchströmbare und parallel zueinander angeordnete plattenförmige Radiatorglieder (5). Es wird vorgeschlagen, dass zumindest zwischen zwei benachbarten Radiatorgliedern (5) zumindest ein elastisch verformbares Element (8,9,11) vorgesehen ist, welches so ausgebildet ist, dass es einer Ausdehnung der Radiatorglieder (5) normal zur Oberfläche der Radiatorglieder (5) entgegen wirkt. Mit diesen Elementen (8,9,11) kann eine plastische Verformung der Wände der Radiatorglieder verhindert werden.

## Beschreibung

### GEBIET DER ERFINDUNG

Die Erfindung betrifft einen Radiator zur Kühlung eines Transformators, vorzugsweise eines Leistungstransformators, oder einer Drossel, der Radiator umfassend mehrere parallel von einem Kühlmittel durchströmbare und parallel zueinander angeordnete plattenförmige Radiatorglieder. Die Erfindung betrifft weiters eine Einheit aus einem Transformator und einem Radiator, oder eine Einheit aus einer Drossel und einem Radiator, sowie ein Verfahren zur Herstellung eines Radiators.

Die Erfindung kann auch für Radiatoren zur Kühlung von anderen elektrischen Einrichtungen verwendet werden, die ebenfalls mit einem flüssigen Kühlmittel, wie Mineralöl oder Ester, gekühlt werden.

### STAND DER TECHNIK

Leistungstransformatoren werden häufig durch Radiatoren gekühlt, das heißt, das erwärmte Kühlmittel wird aus dem Gehäuse des Leistungstransformators heraus, durch einen oder mehrere Radiatoren und wieder zurück in das Gehäuse geführt. Im Radiator wird die Wärme über große Oberflächen an die umgebende Luft abgegeben. Dabei kann die umgebende Luft alleine aufgrund des Auftriebs (natürliche Kühlung) zirkulieren oder mittels Lüfter (forcierte Kühlung) über die Oberflächen des Radiators geblasen werden. Die Radiatoren sind meist als Plattenradiatoren ausgebildet, wo die Luft zwischen mehreren plattenförmigen Radiatorgliedern hindurch strömen kann, während das zu kühlende Kühlmittel parallel durch die Radiatorglieder eines Plattenradiators geleitet wird.

Bei hermetisch abgeschlossenen Einheiten (Gehäuse eines Transformators und Radiator(en) bzw. Gehäuse einer Drossel und Radiator(en)) muss die Wärmeausdehnung des Kühlmittels aufgenommen werden, oder anders betrachtet, muss ein Druckanstieg in der Einheit aus Transformator bzw. Drossel und Radiator aufgenommen werden. Dies kann mittels eines separaten Gasvolumens, also etwa eines Ausdehnungsgefäßes, erfolgen, was aber möglichst vermieden werden soll. Es ist aber auch bekannt, den Radiator als Dehnradiator auszubilden, bei dem sich das Volumen der Radiatorglieder selbst durch Ausdehnung, insbesondere Ausbauchung der Wände der Radiatorglieder, vergrößert. Dabei muss eine plastische Verformung der Radiatorglieder vermieden werden. Plattenförmige Radiatorglieder bestehen in der Regel aus zwei, insbesondere identischen, Halbschalen, die am Rand miteinander verschweißt sind. Meist sind diese Wände strukturiert, um z.B. Strömungskanäle auszubilden. Dort, wo die Wände Einzüge aufweisen, z.B. rinnenförmige Längseinzüge oder Sicken, haben die einander gegenüber liegenden Wände eines Radiatorglieds einen geringen Abstand und können mittels Punktschweißungen miteinander verbunden werden. Dies erhöht einerseits die Druckfestigkeit des Radiatorglieds, verringert aber andererseits dessen Volumsdehnung.

### DARSTELLUNG DER ERFINDUNG

Es ist somit eine Aufgabe der Erfindung, einen Radiator zur Verfügung zu stellen, bei dem die Volumsdehnung der

Radiatorglieder im Vergleich zu Radiatorgliedern mit Punktschweißungen erhöht ist, jedoch eine plastische Verformung der Wände der Radiatorglieder dennoch verhindert wird.

Diese Aufgabe wird durch einen Radiator nach Anspruch 1 gelöst. Ausgangspunkt ist ein Radiator zur Kühlung eines Transformators, vorzugsweise eines Leistungstransformators, oder einer Drossel, der Radiator umfassend mehrere parallel von einem Kühlmittel durchströmbare und parallel zueinander angeordnete plattenförmige Radiatorglieder. Dabei ist vorgesehen, dass zumindest zwischen zwei benachbarten Radiatorgliedern zumindest ein elastisch verformbares Element vorgesehen ist, welches so ausgebildet ist, dass es einer Ausdehnung der Radiatorglieder normal zur Oberfläche der Radiatorglieder entgegen wirkt.

Das zumindest eine elastisch verformbare Element wirkt also von außen einer Ausdehnung des Radiatorglieds entgegen, wodurch eine plastische Verformung der Wände des Radiatorglieds verhindert wird. Dort, wo das elastisch verformbare Element auf das Radiatorglied einwirkt, ist keine weitere Volumsbegrenzung notwendig, eine Punktschweißung kann hier unterbleiben. Insofern ist eine größere Volumsdehnung möglich, weil dort keine Punktschweißung eine maximal mögliche Volumsausdehnung vorgibt.

Grundsätzlich ist aber möglich, dass für ein Radiatorglied in einem oder mehreren Bereichen Punktschweißungen, in einem oder mehreren anderen Bereichen keine Punktschweißungen, sondern nur ein oder mehrere elastisch verformbare Elemente vorgesehen sind.

Eine Auführungsform der Erfindung besteht jedoch darin, dass die Radiatorglieder, für welche ein elastisch verformbares Element vorgesehen ist, innerhalb ihres Randes keine Schweißung, insbesondere keine Punktschweißung, zwischen einander gegenüberliegenden Wänden aufweist. Selbstverständlich müssen in diesem Fall die notwendigen Schweißungen, welche gegebenenfalls die Einzelteile des Radiatorglieds miteinander dicht verbinden, vorhanden sein. Diese befinden sich in der Regel am Rand eines Radiatorelements. Diese Schweißung ist etwa die umlaufende Schweißnaht, welche zwei Halbschalen eines Radiatorglieds miteinander verbindet. Darüber hinaus sind jedoch keine Verschweißungen vorgesehen, welche einander gegenüberliegende Wände des Radiatorglieds miteinander verbinden. Es wird dadurch der Querschnitt des Radiatorelements nicht durch Punktschweißungen verringert.

Da die erfindungsgemäßen elastisch verformbaren Elemente außerhalb der Radiatorglieder angebracht sind, verändern sie die hydraulischen Eigenschaften im Inneren der Radiatorglieder nicht. Auch können die erfindungsgemäßen Elemente nachträglich an einem Radiator angebracht werden, wenn dieser schon im Betrieb ist oder war, und müssen nicht bereits bei der Produktion des Radiators angebracht werden, also nicht, bevor die Radiatorglieder zu einem Radiator zusammengebaut werden.

Das elastisch verformbare Element kann insbesondere aus Federstahl gefertigt sein. Federstahl ist in einschlägigen Normen definiert und zeichnet sich durch eine hohe Elastizitätsgrenze aus, z.B. durch eine Elastizitätsgrenze von mindestens 1150 N/mm² bei einer Zugfestigkeit von z.B. 1300 bis 1600 N/mm².

In einer Ausführungsform der Erfindung ist vorgesehen, dass das elastisch verformbare Element aus einem Federstahlband gefertigt ist. Auf diese Weise kann das Element durch ein- oder mehrfaches Biegen, insbesondere normal zur Längserstreckung des Federstahlbandes, einfach an den Abstand zwischen den beiden Radiatorelementen angepasst werden, welcher Abstand über die Länge und/oder Breite des Radiatorelements variieren kann.

Insbesondere kann bei dieser Ausführungsform vorgesehen sein, dass das Federstahlband wellenförmig gebogen ist, wobei zumindest ein Scheitelpunkt mit einem Radiatorglied in Eingriff steht. Der Scheitelpunkt wird dabei in der Regel lediglich am Radiatorglied anliegen und wird dort nicht eigens befestigt sein. Das gebogene Federstahlband wird am besten nur an seinen Enden mit einem und/oder dem anderen benachbarten Radiatorelement fest verbunden, z.B. angeschweißt, sein.

Insbesondere kann vorgesehen sein, dass zumindest ein weiterer Scheitelpunkt mit dem anderen Radiatorglied in Eingriff steht. Der Scheitelpunkt wird dabei auch hier in der Regel lediglich am Radiatorglied anliegen und wird dort nicht eigens befestigt sein.

Das wellenförmig gebogene Federstahlband wird in der Regel eine Vielzahl von Scheitelpunkten aufweisen. Ein Federstahlband kann sich über die gesamte Länge oder Breite eines Radiatorglieds erstrecken. Damit wird nur ein einziges Element für die gesamte Länge oder Breite benötigt und es sind nur zwei Befestigungsstellen notwendig.

Insbesondere in diesem Fall kann vorgesehen sein, dass das elastisch verformbare Element nur am Rand zumindest eines Radiatorglieds befestigt ist, was somit die Befestigung des Federstahlbandes erleichtert.

Es ist aber auch denkbar, dass über die Länge und/oder Breite des Radiatorglieds mehrere, insbesondere gleichartige, elastisch verformbare Elemente vorgesehen sind.

In einer alternativen Ausführungsform kann vorgesehen sein, dass das elastisch verformbare Element eine Schraubenfeder ist, deren beide Enden jeweils mit einem Radiatorglied in Eingriff stehen. Dabei werden in der Regel pro Paar von einander gegenüberliegenden Radiatorgliedern mehrere Schraubenfedern vorgesehen sein. Die Länge der Schraubenfedern ist an den Abstand der beiden Radiatorglieder abzustimmen. Die Schraubenfedern werden in der Regel normal zur Oberfläche des Radiatorglieds ausgerichtet sein.

Unabhängig davon, wie die elastisch verformbaren Elemente nun ausgebildet sind, kann vorgesehen sein, dass mehrere elastisch verformbare Elemente über die Länge und/oder Breite eines Radiatorglieds verteilt vorgesehen sind, wobei ein erstes elastisch verformbares Element eine andere Federkonstante aufweist als ein zweites elastisch verformbares Element. Durch eine Variation der Federkonstante wird eingestellt, wie nachgiebig das Element ist und damit, wie stark sich die Radiatorglieder an der Stelle dieses Elements ausdehnen können. Damit kann eingestellt werden, dass sich die Radiatorglieder an einer bestimmten Stelle mehr ausdehnen können als an einer anderen Stelle. So könnten etwa an einer Stelle, wo weniger Ausdehnung gewünscht wird, steifere Schraubenfedern verwendet werden als an einer anderen Stelle, wo mehr Ausdehnung zugelassen wird.

Es kann vorgesehen sein, dass das elastisch verformbare Element durch Formschluss in seiner Lage zwischen zwei benachbarten Radiatorgliedern gehalten ist. Dies hat den Vorteil, dass dieser Formschluss zur Befestigung des Elements beiträgt und eine zusätzliche Befestigung entfallen oder weniger belastbar ausgestaltet werden kann. So könnte das Element etwa allein durch das Einschieben bis zur gewünschten Lage zwischen den benachbarten Radiatorgliedern bereits seine Funktion erfüllen.

Die Erfindung kann auf unterschiedliche Typen von Radiatoren angewendet werden, z.B. auf Plattenradiatoren und auf sogenannte Wellblechkessel, wo die Radiatorglieder Teil des Kessels des Transformators oder der Drossel sind.

Die Erfindung umfasst auch eine Einheit aus einem Transformator und einem erfindungsgemäßen Radiator, oder aus einer Drossel und einem erfindungsgemäßen Radiator. Der Radiator ist dabei in den Kühlkreislauf des Transformators bzw. der Drossel eingebunden. Es kann einerseits vorgesehen sein, dass die Radiatorglieder Teil des Kessels des Transformators bzw. des Kessels der Drossel sind und jedes Radiatorglied direkt mit dem Inneren des Kessels verbunden ist. Der Radiator bildet dann keinen separaten Bauteil, sondern eine Einheit mit dem Kessel des Transformators bzw. der Drossel. Dies wäre bei einem Wellblechkessel der Fall. Es kann andererseits vorgesehen sein, dass der Radiator vom Kessel des Transformators bzw. der Drossel räumlich getrennt ist und zumindest eine Leitung zwischen Kessel und Radiator vorgesehen ist. Die Leitung mündet also in den als separatem Bauteil ausgebildeten Radiator und das Kühlmittel wird erst nach dieser Leitung im Radiator auf die einzelnen Radiatorglieder verteilt.

Ein Verfahren zur Herstellung eines erfindungsgemäßen Radiators kann so erfolgen, dass dass das zumindest eine elastisch verformbare Element an einem Radiator angebracht wird, der bereits in Betrieb und mit einem Transformator oder einer Drossel verbunden ist.

Insbesondere kann vorgesehen sein, dass das zumindest eine elastisch verformbare Element zwischen zwei benachbarte Radiatorglieder eingeschoben wird und durch Formschluss in seiner Lage zwischen den zwei benachbarten Radiatorgliedern gehalten wird.

### KURZE BESCHREIBUNG DER FIGUREN

Zur weiteren Erläuterung der Erfindung wird im nachfolgenden Teil der Beschreibung auf Figuren Bezug genommen, aus denen weitere vorteilhafte Einzelheiten und mögliche Einsatzgebiete der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigt:
- Fig. 1: eine schematische Darstellung eines Transformators mit einem Radiator,
- Fig. 2: eine schematische Darstellung eines ersten erfindungsgemäßen Radiators im Querschnitt, umfassend Federstahlbänder,
- Fig. 3: eine schematische Darstellung des Radiators aus Fig. 2 in perspektivischer Darstellung,
- Fig. 4: eine schematische Darstellung eines zweiten erfindungsgemäßen Radiators im Querschnitt, umfassend Schraubenfedern.

### WEGE ZUR AUSFÜHRUNG DER ERFINDUNG

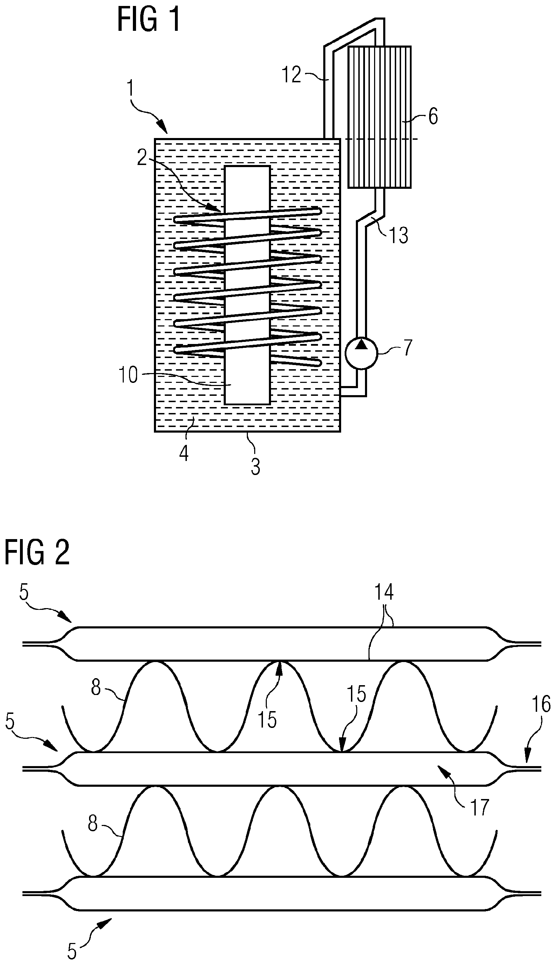

Fig. 1 zeigt eine schematische Darstellung eines Transformators 1. Der Transformator 1 verfügt über zumindest eine Transformatorwicklung 2, die um einen Kern 10 gewickelt ist. Die Transformatorwicklung 2 besteht z.B. aus einer nicht weiter dargestellten Unter- sowie Oberspannungswicklung. Darüber hinaus verfügt der Transformator 1 über ein Gehäuse 3, das mit einem Kühlmittel 4 befüllt ist. Zur Aufnahme des Kühlmittels 4 bei hohen Temperaturen ist hier kein Ausdehnungsgefäß vorgesehen.

Ausgehend vom Gehäuse 3 ist ein Kühlkreislauf vorgesehen. Der Kühlkreislauf verfügt über ein Steigrohr 12 als Steigabschnitt, ferner ist ein Rückleitungsrohr 13 zurück in das Gehäuse 3 vorgesehen. Zwischen Steigrohr 12 und Rückleitungsrohr 13 ist zumindest ein Radiator 6 vorgesehen. Der Radiator 6 umfasst mehrere parallel zueinander durchströmte plattenförmige Radiatorglieder 5, siehe Fig. 2 bis 4. Die Radiatorglieder 5 sind in der Regel auch parallel zueinander angeordnet. Zwischen den Radiatorgliedern 5 strömt Kühlluft parallel zu den Radiatorgliedern 5 hindurch.

Weiters kann eine Pumpe 7 zum An- und Absaugen des Kühlmittels 4 im Kühlkreislauf angeordnet sein, z.B. im Rückleitungsrohr 13, wodurch es zu einer erzwungenen Zirkulation des Kühlmittels 4 innerhalb des Kühlkreislaufs und des Gehäuses 3 kommt.

Zwischen zwei Radiatorgliedern 5 ist nun, siehe Fig. 2, zumindest ein elastisch verformbares Element in Form eines Federstahlbands 8 vorgesehen. Das Federstahlband 8 ist wellenförmig gebogen, wobei zumindest die Scheitelpunkte 15 eine Seite, hier die drei oberen Scheitelpunkte 15, mit dem oberen Radiatorglied 5 in Eingriff stehen, während die vier unteren Scheitelpunkte 15 mit dem unteren Radiatorglied 5 in Eingriff stehen. Die Radiatorglieder 5 können sich links und rechts weiter fortsetzen; so könnte der Sicke 16 erneut eine Ausbuchtung 17 folgen, und so fort. Ebenso würden sich die Federstahlbänder 8 fortsetzen.

Jedes Radiatorglied 5 ist hier aus zwei identischen Halbschalen 14 gefertigt, die meist eine annähernd rechteckige Form besitzen. Die beiden Halbschalen 14 sind an ihrem - annähernd rechteckigen - Rand miteinander verschweißt. Gemäß Stand der Technik würde man zusätzlich noch Punktschweißungen in den Sicken 16 anbringen, um eine zu starke Ausdehnung der Halbschalen 14 zu unterbinden. Gemäß Erfindung sind aber hier keine Punktschweißungen vorgesehen, sondern eine zu starke Ausdehnung der Halbschalen 14 wird allein durch die Federstahlbänder 8 verhindert, die gegen die Halbschalen 14 drücken, wenn sich diese normal zur - in dieser Darstellung waagrechten - Oberfläche der Radiatorglieder 5 bzw. Halbschalen 14 ausdehnen.

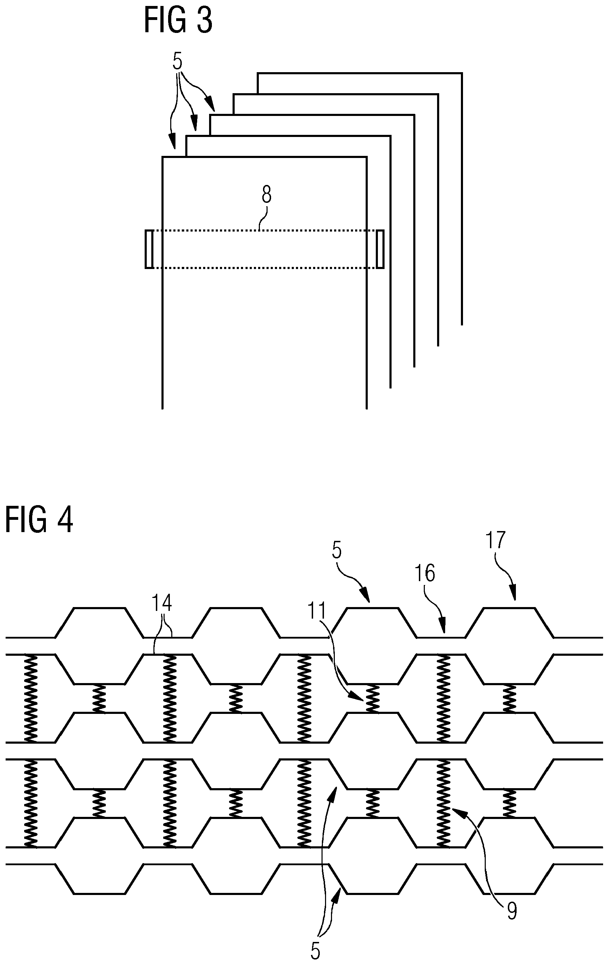

Fig. 3 zeigt eine schematische Darstellung des Radiators aus Fig. 2 in perspektivischer Darstellung, wobei hier nur ein Federstahlband 8 strichliert eingezeichnet ist, welches sich über die gesamte Breite des Radiatorglieds 5 erstreckt und an den Seiten des Radiatorglieds 5 befestigt ist. Weitere Federstahlbänder 8 können zwischen den gleichen Radiatorgliedern 5 darüber und darunter angeordnet sein. Auch zwischen den anderen Radiatorgliedern 5 können sich Federstahlbänder 8 befinden.

Die Federstahlbänder 8 können einfach zwischen die Radiatorglieder 5 bis zur gewünschten Lage eingeschoben werden, wobei durch Formschluss ihre Lage schon festgelegt ist. Zur Sicherheit können die Federstahlbänder 8 zusätzlich, um etwa ein Verrutschen beim Transport oder im Betrieb zu verhindern, an den Radiatorgliedern 5, z.B. an deren Rand, befestigt werden.

Fig. 4 zeigt einen Ausschnitt eines zweiten erfindungsgemäßen Radiators im Querschnitt, umfassend Schraubenfedern. Die Schraubenfedern 9, welche zwei benachbarte Radiatorglieder 5 im Bereich der Sicken 16 miteinander verbinden, haben eine größere Länge als die Schraubenfedern 11, welche zwei benachbarte Radiatorglieder 5 im Bereich der Ausbuchtungen 17 miteinander verbinden. Auch hier sind bei den Radiatorgliedern 5 keine Punktschweißungen zwischen einander gegenüberliegenden Wänden 14 vorgesehen. Wenn sich die einander zugewandten Wände 14 von zwei benachbarten Radiatorgliedern 5 infolge der Volumsausdehnung der Radiatorglieder 5 einander annähern, wird dieser Bewegung durch die Schraubenfedern 9,11 entgegen gewirkt und die Bewegung wird begrenzt.

### Bezugszeichenliste:

- 1: Transformator
- 2: Transformatorwicklung
- 3: Gehäuse
- 4: Kühlmittel
- 5: Radiatorglied
- 6: Radiator
- 7: Pumpe
- 8: Federstahlband (elastisch verformbares Element)
- 9: Schraubenfeder (elastisch verformbares Element)
- 10: Kern
- 11: Schraubenfeder (elastisch verformbares Element)
- 12: Steigrohr
- 13: Rückleitungsrohr
- 14: Halbschale des Radiatorglieds 5
- 15: Scheitelpunkt
- 16: Sicke
- 17: Ausbuchtung

## Patentansprüche

1. Radiator (6) zur Kühlung eines Transformators (1), vorzugsweise eines Leistungstransformators, oder einer Drossel, der Radiator (6) umfassend mehrere parallel von einem Kühlmittel durchströmbare und parallel zueinander angeordnete plattenförmige Radiatorglieder (5), **dadurch gekennzeichnet, dass** zumindest zwischen zwei benachbarten Radiatorgliedern (5) zumindest ein elastisch verformbares Element (8, 9, 11) vorgesehen ist, welches so ausgebildet ist, dass es einer Ausdehnung der Radiatorglieder (5) normal zur Oberfläche der Radiatorglieder (5) entgegen wirkt.

2. Radiator (6) nach Anspruch 1, **dadurch gekennzeichnet, dass** die Radiatorglieder, für welche ein elastisch verformbares Element (8,9,11) vorgesehen ist, innerhalb ihres Randes keine Schweißung, insbesondere keine Punktschweißung, zwischen einander gegenüberliegenden Wänden aufweist.

3. Radiator (6) nach Anspruch 1 oder 2, **dadurch gekennzeichnet, dass** das elastisch verformbare Element (8,9,11) aus Federstahl gefertigt ist.

4. Radiator (6) nach Anspruch 3, **dadurch gekennzeichnet, dass** das elastisch verformbare Element (8) aus einem Federstahlband gefertigt ist.

5. Radiator (6) nach Anspruch 4, **dadurch gekennzeichnet, dass** das Federstahlband wellenförmig gebogen ist, wobei zumindest ein Scheitelpunkt (15) mit einem Radiatorglied (5) in Eingriff steht.

6. Radiator (6) nach Anspruch 5, **dadurch gekennzeichnet, dass** zumindest ein weiterer Scheitelpunkt (15) mit dem anderen Radiatorglied (5) in Eingriff steht.

7. Radiator (6) nach einem der Ansprüche 4 bis 6, **dadurch gekennzeichnet, dass** sich ein Federstahlband über die gesamte Länge oder Breite eines Radiatorglieds (15) erstreckt.

8. Radiator (6) nach einem der vorhergehenden Ansprüche, **dadurch gekennzeichnet, dass** das elastisch verformbare Element (8) nur am Rand zumindest eines Radiatorglieds (5) befestigt ist.

9. Radiator (6) nach einem der Ansprüche 1 bis 3, **dadurch gekennzeichnet, dass** das elastisch verformbare Element (9, 11) eine Schraubenfeder ist, deren beide Enden jeweils mit einem Radiatorglied (5) in Eingriff stehen.

10. Radiator (6) nach einem der vorhergehenden Ansprüche, **dadurch gekennzeichnet, dass** mehrere elastisch verformbare Elemente (8, 9, 11) über die Länge und/oder Breite eines Radiatorglieds (5) verteilt vorgesehen sind, wobei ein erstes elastisch verformbares Element eine andere Federkonstante aufweist als ein zweites elastisch verformbares Element.

11. Radiator (6) nach einem der vorhergehenden Ansprüche, **dadurch gekennzeichnet, dass** das elastisch verformbare Elemente (8,9,11) durch Formschluss in seiner Lage zwischen zwei benachbarten Radiatorgliedern (5) gehalten ist.

12. Einheit aus einem Transformator (1) oder einer Drossel einerseits, und einem Radiator (6) nach einem der Ansprüche 1 bis 11 andererseits.

13. Verfahren zur Herstellung eines Radiators (6) nach einem der Ansprüche 1 bis 11, **dadurch gekennzeichnet, dass** das zumindest eine elastisch verformbare Element (8, 9, 11) an einem Radiator (6) angebracht wird, der bereits in Betrieb und mit einem Transformator (1) oder einer Drossel verbunden ist.

14. Verfahren nach Anspruch 13, **dadurch gekennzeichnet, dass** das zumindest eine elastisch verformbare Element (8, 9, 11) zwischen zwei benachbarte Radiatorglieder (5) eingeschoben wird und durch Formschluss in seiner Lage zwischen den zwei benachbarten Radiatorgliedern (5) gehalten wird.
